# EUROPEAN PATENT APPLICATION

(11) **EP 4 597 925 A1**
(43) Date of publication of application: **06.08.2025**
(21) Application number: 22959972.5
(22) Date of filing: 28.09.2022
(51) Int. Cl.: H04L 9/22

(54) **INFORMATION PROCESSING METHOD AND APPARATUS**

(71) Applicant: FUJITSU LIMITED, Kawasaki-shi, Kanagawa 211-8588 (JP)
(72) Inventor: LU, Yang, Beijing 100022 (CN); ZHANG, Lei, Beijing 100022 (CN)
(74) Representative: Haseltine Lake Kempner LLP
(86) International application number: PCT/CN2022/122317
(87) International publication number: WO 2024/065329

(57) **Abstract**

Embodiments of this disclosure provide an information processing method and apparatus. The information processing method includes: receiving indication information for indicating a first state and a second state of a cell related to downlink transmission; and receiving information from the cell according to the indication information, wherein the cell is a cell where the terminal equipment is camped or a cell to which the terminal equipment is connected.

## Description

### Technical Field

This disclosure relates to the field of communication technologies.

### Background

As an NR (New Radio) base station needs to operate at a large bandwidth (such as 100MHz), a large number of ports (64T/64R) and shorter TTIs (transmission time intervals) (such as 1ms) need to be used, the NR base station has significantly higher energy consumption overhead in baseband processing, digital front-end, and other functions compared to an LTE (long-term evolution) base station. Moreover, an FR2 (frequency range 2) operating frequency of NR is relatively high (>6GHz), and the higher the frequency, the greater a pathloss of a signal. Therefore, a design principle of NR is to use a narrower beam to transmit the signal further. In this way, the number of antenna units used by the NR base station for analog beamforming will greatly increase, resulting in increases in the numbers of RF units and RF channels for transmitting and receiving signals. Each RF channel is equipped with a power amplifier (PA), which accounts for about 80% of the total energy consumption of the base station, and as the number of PAs increases, the energy consumption of the base station also increases. A current FR1 (frequency range 1) frequency band AAU (active antenna unit) generally uses 192 antenna units and supports 64 channels, which is much larger than a maximum of 8 channels of LTE.

According to data statistics of operators, average energy consumption of an NR base station exceeds three times that of an LTE base station, and nearly 50% of the cost for an operator to deploy 5G (5th generation) networks is electricity expenses. More importantly, an NR base station still incur significant energy consumption even during periods of no service, as it still needs to transmit common signals, such as SSBs (synchronization signal blocks), SIB1 (system information block 1), and SI (system information), etc., thereby greatly reducing energy efficiency of the NR base station. Energy saving in NR networks is an urgent issue that needs to be addressed.

It should be noted that the above description of the background art is merely provided for clear and complete explanation of this disclosure and for easy understanding by those skilled in the art. And it should not be understood that the above technical solution is known to those skilled in the art as it is described in the background art of this disclosure.

### Summary of the Disclosure

In 3GPP Rel-15/Rel-16 (3rd Generation Partnership Project Release 15/Release 16), it is supported that in an intra-band carrier aggregation (CA) scenario, a secondary cell (SCell) of a terminal equipment may not transmit synchronization signal blocks (SSBs), and the terminal equipment obtains downlink synchronization of the SCell from SSBs transmitted by a special cell (SpCell). At the same site, at least one cell transmits SSBs, and only a cell that transmits SSBs may serve as the SpCell of the terminal equipment.

For energy conservation of the network, for the SpCell of the UE, the network device may dynamically activate and deactivate based on traffics, measurement reports and other information of an NR cell and its neighbor cell. When a cell is deactivated, transmission of an SSB, SIB1 and SI of the cell is stopped, and reception of uplink signals transmitted by the UE is stopped. In this way, in case of lower traffics, energy consumption of the SpCell may be saved.

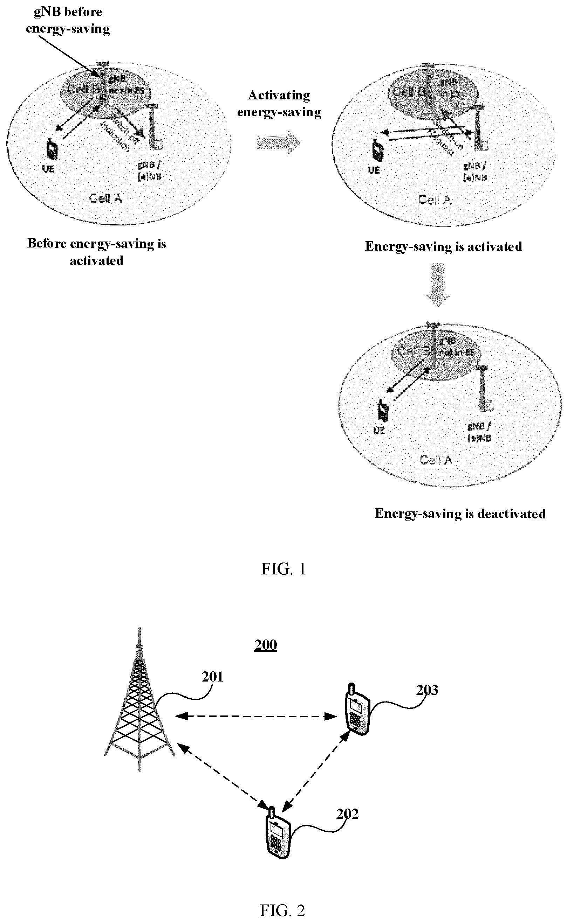

FIG. 1 is a schematic diagram of energy conservation scheme of a network. As shown in FIG. 1, when the NR cell enters an energy-saving state, the base station switches the UE to the neighbor cell and inform a neighbor NR base station or LTE base station that the NR cell has entered the energy-saving state. The neighbor NR base station or LTE base station will assume a coverage area and traffics of the NR cell. Afterwards, the neighbor NR base station or LTE base station will determine whether to request the NR cell that has entered the energy-saving state to resume normal operations according to its own traffics, and measurement reports, etc. For example, when its own traffics reach a threshold, it triggers requesting the NR cell that has entered the energy-saving state to resume normal operations. When the NR cell resumes normal operations, some UEs that were previously switched to a neighbor NR base station or LTE base station may be switched back to the NR cell.

It was found by the inventors that in the above scheme, if the NR cell is in the energy-saving state, it means that the cell is unable to receive and transmit any signal, hence, a UE originally connected to the cell must be switched over to a neighbor cell, and a UE originally camped on the cell will perform cell reselection to camp on the neighbor cell. When the NR cell dynamically enters the energy-saving state for multiple times, the UE will be frequently switched out of the NR cell or frequently perform cell reselection, thereby affecting user experiences. **In** addition, migration of the UE of the cell in the energy-saving state to the neighbor cell will inevitably increase a load level of the neighbor cell, and affect service quality of the UE of the neighbor cell.

In order to solve at least one of the above problems, embodiments of this disclosure provide an information processing method and apparatus.

According to one aspect of the embodiments of this disclosure, there is provided an information processing apparatus, applicable to a terminal equipment, the apparatus including:
a receiving unit configured to receive indication information for indicating a first state and a second state of a cell related to downlink transmission; and
a processing unit configured to receive information from the cell according to the indication information, the cell being a cell where the terminal equipment is camped or a cell to which the terminal equipment is connected.

According to another aspect of the embodiments of this disclosure, there is provided an information processing method, applicable to a terminal equipment, the method including:
receiving indication information for indicating a first state and a second state of a cell related to downlink transmission; and
receiving information from the cell according to the indication information, the cell being a cell where the terminal equipment is camped or a cell to which the terminal equipment is connected.

According to a further aspect of the embodiments of this disclosure, there is provided an information processing apparatus, applicable to a network device, the apparatus including:
a transmitting unit configured to transmit indication information for indicating a first state and a second state of a cell related to downlink transmission to a terminal equipment, so that the terminal equipment receives information from the cell according to the indication information, the cell being a cell where the terminal equipment is camped or a cell to which the terminal equipment is connected.

An advantage of the embodiments of this disclosure exists in that the terminal equipment may receive indication information for indicating a first state and a second state of the cell to which the terminal equipment is connected or where the terminal equipment is camped related to downlink transmission, and receive information from the cell according to the indication information, and the cell may switch between different states related to downlink transmission. Hence, energy consumption overhead of the network device may be saved, and the terminal equipment camped on the cell or connected to the cell may receive information from the cell according to the indication information for indicating the first state and the second state of the cell. Thus, when the cell switches between the first state and the second state, the terminal equipment does not necessarily switch over to another cell, and a terminal equipment originally camped on the cell does not necessarily perform cell reselection, thereby avoiding generation of service interruption and increase of load level of a neighbor cell due to migration of the terminal equipment of the cell in the energy-saving state to the neighbor cell, and ensuring that user experiences are not lowered when the cell enters the energy-saving state.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiments.
FIG. 1 is a schematic diagram of a network energy-saving scheme;
FIG. 2 is a schematic diagram of a communication system of an embodiment of this disclosure;
FIG. 3 is a schematic diagram of an information processing method of an embodiment of this disclosure;
FIG. 4 is a schematic diagram of a time of switching between a first state and a second state of the embodiment of this disclosure;
FIG. 5 is a schematic diagram of a time of switching between a non-energy-saving state, the first state and the second state of the embodiment of this disclosure;
FIG. 6 is a schematic diagram of starting or stopping a first timer and a second timer of the embodiment of this disclosure;
FIG. 7 is a schematic diagram of times of receiving HARQ initial transmission data and HARQ retransmission data of the embodiment of this disclosure;
FIG. 8 is a schematic diagram of an information processing method of an embodiment of this disclosure;
FIG. 9 is a schematic diagram of an information processing apparatus of an embodiment of this disclosure;
FIG. 10 is a schematic diagram of an information processing apparatus of an embodiment of this disclosure;
FIG. 11 is a schematic diagram of a terminal equipment of an embodiment of this disclosure; and
FIG. 12 is a schematic diagram of a network device of an embodiment of this disclosure.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G, and new radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.), an IAB (integrated access and backhaul) node or an IAB-DU or an IAB-donor. The term "base station" may include some or all of its functions, and each base station may provide communication coverage for a specific geographical area. And a term "cell" may refer to a base station and/or its coverage area, depending on a context of the term. Without causing confusion, the term "cell" and the term "base station" are interchangeable.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment, except otherwise specified.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, transmitting or receiving a PUSCH may be understood as transmitting or receiving uplink data carried by the PUSCH, transmitting or receiving a PUCCH may be understood as transmitting or receiving uplink information carried by the PUCCH, transmitting or receiving a PRACH may be understood as transmitting or receiving a preamble carried by the PRACH. The uplink signal may include an uplink data signal and/or an uplink control signal, etc., and may be referred to as uplink transmission or uplink information or an uplink channel. Transmitting uplink transmission on an uplink resource may be understood as transmitting the uplink transmission by using the uplink resource. Likewise, downlink data/signal/channel/information may be understood correspondingly.

In the embodiments of this disclosure, higher-layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

Scenarios in the embodiments of this disclosure shall be described below by way of examples; however, this disclosure is not limited thereto.

FIG. 2 is a schematic diagram of a communication system of an embodiment of this disclosure, in which a case where terminal equipments and a network device are taken as examples is schematically shown. As shown in FIG. 2, the communication system 200 may include a network device 201 and terminal equipments 202, 203. For the sake of simplicity, an example having only two terminal equipments and one network device is schematically given in FIG. 2; however, the embodiment of this disclosure is not limited thereto.

In the embodiment of this disclosure, existing services or services that may be implemented in the future may be performed between the network device 201 and the terminal equipments 202, 203. For example, such services may include but not limited to an enhanced mobile broadband (eMBB), massive machine type communication (mMTC), and ultra-reliable and low-latency communication (URLLC), etc.

Wherein, the terminal equipment 202 may transmit data to the network device 201, such as in a granted or grant-free transmission manner. The network device 201 may receive data transmitted by one or more terminal equipments 202 and feed back information to the terminal equipment 202, such as acknowledgement (ACK)/non-acknowledgement (NACK) information. According to the feedback information, the terminal equipment 202 may acknowledge end of a transmission process, or may perform new data transmission, or may perform data retransmission.

It should be noted that FIG. 2 shows that two terminal equipments 202, 203 are both in coverage of the network device 201. However, this disclosure is not limited thereto, and the two terminal equipments 202, 203 may not be in coverage of the network device 201, or one terminal equipment 202 is in coverage of the network device 201 and the other terminal equipment 203 is out of coverage of the network device 201.

Embodiments of this disclosure shall be described below with reference to implementations and the accompanying drawings.

### Embodiment of a first aspect

The embodiment of this disclosure provides an information processing method, which shall be described from a terminal equipment (UE) side.

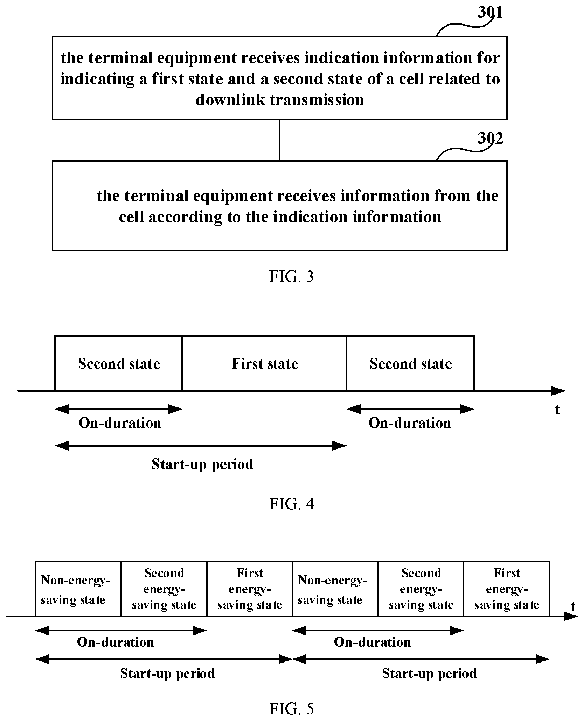

FIG. 3 is a schematic diagram of the information processing method of the embodiment of this disclosure, applicable to a terminal equipment. As shown in FIG. 3, the method includes:
301: the terminal equipment receives indication information for indicating a first state and a second state of a cell related to downlink transmission; and
302: the terminal equipment receives information from the cell according to the indication information,
wherein the cell is a cell where the terminal equipment is camped or a cell to which the terminal equipment is connected.

It should be noted that FIG. 3 only schematically illustrates the embodiment of this disclosure; however, this disclosure is not limited thereto. For example, some other steps may be added, or some steps therein may be reduced. And appropriate variants may be made by those skilled in the art according to the above contents, without being limited to what is contained in FIG. 3.

In some embodiments, downlink signals transmitted when the cell is in the first state may be less than downlink signal transmitted when the cell is in the second state. By switching the cell between the first state and the second state, overhead of the network device mat be saved.

In some embodiments, the first state of the cell of the network device may be referred to as a transmission state (TX active), the second state thereof may be referred to as a non-transmission state (TX inactive), and switching of the cell between the first state and the second state may be referred to as discontinuous transmission (DTX) of the cell.

In some embodiments, the first state of the cell may include a first energy-saving state, and the second state may include a non-energy-saving state and/or a second energy-saving state; or, the first state of the cell may include a first energy-saving state and/or a second energy-saving state, and the second state may include a non-energy-saving state; wherein downlink signals transmitted when the cell is in the first energy-saving state may be less than downlink signals transmitted when the cell is in the second energy-saving state.

In some embodiments, the cell may have multiple energy-saving modes, and the network device may enable the cell to enter different energy-saving (ES) states. The energy-saving states of the cell may include at least one of the following: a time-domain energy-saving state, a frequency-domain energy-saving state, a spatial domain energy-saving state, and a power-domain energy-saving state. The cell may be in one of the above energy-saving states, or may be in more than one of the above energy-saving states at the same time, such as in the time-domain and spatial domain energy-saving states at the same time.

In some embodiments, during operation of the cell, the cell may be switched between different energy-saving states. Switching between different energy-saving states may be achieved by switching configuration parameters of the cell or a BWP (bandwidth part), that is, if the configuration parameters of the cell or the BWP are switched to configuration parameters supporting a corresponding energy-saving state, the cell or the BWP is switched to the energy-saving state.

In some embodiments, the time-domain energy-saving state may include at least one of the following:
--stopping transmitting a common signal, such as stopping transmission of an SSB (synchronization signal block), an SIB (system information block) and/or paging;
--stopping transmitting a common signal and a UE-specific signal;
--transmitting a common signal at an extended transmission period (cycle), such as extending a transmission period of an SSB (synchronization signal block), an SIB (system information block) and/or paging; for example, the transmission period(s) of the SSB/SIB is/are made longer than the SSB/SIB of an SSB/SIB in a normal service state (non-energy-saving state), and in the normal service state, a longest transmission period of the SSB is 160ms, and in a time-domain energy-saving state, the transmission period of the SSB may be longer than 160ms;
--transmitting a simplified common signal, wherein the simplified common signal may include a synchronization signal block (SSB) excluding a master information block (MIB) or a physical broadcast channel (PBCH); for example, a transmitted SSB includes a synchronization reference signal (SS) only, or includes a discovery reference signal including a synchronization reference signal (SS); and
--stopping or reducing receiving signals, such as stopping receiving semi-statically configured uplink signals, including a physical random access channel (PRACH), a configured grant (CG) physical uplink shared channel (PUSCH), an SRS, a scheduling request (SR), and a periodic channel state information (CSI) report or a physical uplink control channel (PUCCH), etc., or stopping receiving dynamically scheduled uplink signals, including a PUSCH scheduled by downlink control information (DCI), hybrid automatic repeat request (HARQ) feedback of a physical downlink shared channel (PDSCH) or an aperiodic CSI report, etc.

In the above time-domain energy-saving state, the cell may be in the energy-saving state while transmitting or receiving, or the cell may be in the energy-saving state while transmitting and receiving. For example, when the cell is in a state of stopping or reducing receiving signals, it may transmit downlink signals normally, or, when the cell is in a state of stopping or reducing receiving signals, it may stop or reduce transmitting downlink signals, or, when the cell is in a state of stopping or reducing transmitting downlink signals, it may receive signals normally, and so on.

In some embodiments, from the perspective of downlink transmission, the time-domain energy-saving state may further be divided into a first time-domain energy-saving state and a second time-domain energy-saving state. For example, the first time-domain energy-saving state may include at least one of the following: stopping transmitting a common signal and stopping transmitting a common signal and a UE-specific signal; wherein receiving signals is not limited in the first time-domain energy-saving state, that is, in the first time-domain energy-saving state, receiving uplink signals may be performed normally, or stopped, or reduced.

The second time-domain energy-saving state may include at least one of the following: transmitting a common signal at an extended transmission period, transmitting a simplified common signal, and normally transmitting a downlink signal and stopping or reducing receiving an uplink signal; wherein in the second time-domain energy-saving state, receiving signals is not limited when a common signal is transmitted at an extended transmission period or a simplified common signal is transmitted, that is, when a common signal is transmitted at an extended transmission period or a simplified common signal is transmitted, receiving uplink signals may be performed normally, or stopped, or reduced.

In some embodiments, the frequency-domain energy-saving state may include reducing a service bandwidth, such as reducing uplink and downlink bandwidths of an initial BWP and a dedicated BWP.

In some embodiments, the spatial domain energy-saving state includes at least one of the following:
--reducing the number of antenna elements or radio frequency transceiving units (TxRUs);
--reducing the number of transmitted analog beams, such as reducing the number of beams of an SSB (indicated by ssb-PositionsInBurst);
--reducing the number of transmit antenna ports of a channel state information reference signal (CSI-RS) (the number of digital beam-forming ports); and
--reducing the number of transmission reception points.

In some embodiments, the power domain energy-saving state may include at least one of the following:
--reducing transmit power of a downlink reference signal or a common signal, such as reducing transmit power of an SSB, or reducing transmit power of a CSI-RS, or reducing transmit power of a broadcast channel and paging, etc.; and
--reducing transmit power of a data channel.

In some embodiments, the first energy-saving state may include a first time-domain energy-saving state, or a combination of the first time-domain energy-saving state and at least one of the frequency-domain energy-saving state, the spatial domain energy-saving state and the power domain energy-saving state.

In some embodiments, the second energy-saving state may include at least one of the following or a combination thereof: a second time-domain energy-saving state, a frequency-domain energy-saving state, a spatial domain energy-saving state, and a power domain energy-saving state.

When the first state of the cell includes the first energy-saving state and the second state includes the non-energy-saving state and/or the second energy-saving state, the cell stops transmitting common signals or stops transmitting common signals and dedicated signals in the first state, and transmits signals normally or reduces transmitting common signals at least in the time domain in the second state.

In other words, in performing discontinuous transmission (DTX), the cell stops transmitting common signals or stops transmitting common signals and dedicated signals in a non-transmission state (the first state), and transmits signals normally or reduces transmitting common signals at least in the time domain in a transmission state (the second state).

When the first state of the cell includes a first energy-saving state and/or a second state, and the second state includes a non-energy-saving state, the cell stops transmitting common signals or stops transmitting common signals and dedicated signals in the first state, or reduces transmitting common signals at least in the time domain, and the cell transmits signals normally in the second state.

In other words, in performing discontinuous transmission (DTX), the cell stops transmitting common signals or stops transmitting common signals and dedicated signals or reduces transmitting common signals at least in the time domain in the non-transmission state (the first state), and the cell transmits signals normally in the transmission state (the second state).

In some embodiments, the indication information may include various information that is able to indicate the first state and the second state of the cell, and may be configured or indicated in various modes. The indication information shall be exemplified below.

In some embodiments, discontinuous transmission (DTX) of the cell may be semi-statically configured. For example, the indication information may include configuration information of a first timer, wherein during running of the first timer, the cell is in the second state; however, this disclosure is not limited thereto, and during the running of the first timer, the cell may also be in the first state. Following description shall be given by taking that the cell is in the second state during the running of the first timer as an example.

In some embodiments, the configuration information of the first timer may include at least one of the following: a running time length (on-duration) of the first timer, a start-up time offset of the first timer, and a start-up period of the first timer.

FIG. 4 is a schematic diagram of a time of switching between the first state and the second state of the embodiment of this disclosure. In some embodiments, as shown in FIG. 4, the on-duration of the first timer and the start-up period of the first timer may be indicated in the indication information; wherein during the on-duration of the first timer, the cell is in the second state, and during other times, the cell is in the first state. Thus, the UE may determine times when the cell is in the first state and the second state according to the indication information. Furthermore, the indication information may include the start-up time offset of the first timer, thereby improving flexibility of configuration of the first timer.

In some embodiments, the indication information including the configuration information of the first timer may be transmitted by adding an information unit related to configuring discontinuous transmission (DTX) in a system broadcast message; however, this disclosure is not limited thereto, and the indication information may also be transmitted by other means.

In some embodiments, the indication information may further include at least one of the following, and the UE determines the configuration information of the first timer according to the indication information:
--a time length, a period and an offset in the period during which the cell is in the non-energy-saving state;
--a time length, a period and an offset in the period during which the cell is in the first energy-saving state; and
--a time length, a period and an offset in the period during which the cell is in the second energy-saving state.

FIG. 5 is a schematic diagram of a time of switching between a non-energy-saving state, the first state and the second state of the embodiment of this disclosure. In some embodiments, as shown in FIG. 5, the indication information may include the time lengths, the periods and the offsets in the periods of the second energy-saving state and the non-energy-saving state. When the period of the first energy-saving state is identical to those of the non-energy-saving state and the second energy-saving state, a sum of the time lengths of the second energy-saving state and the non-energy-saving state may be taken as the on-duration of the first timer, the period of the second energy-saving state may be taken as the start-up period of the first timer, and the offset(s) in the period(s) of the second energy-saving state and/or the non-energy-saving state may be taken as the start-up time offset of the first timer.

In some embodiments, the discontinuous transmission (DTX) of the cell may be dynamically indicated. For example, the indication information may include at least one of the following: first information for indicating switching of the cell between the first state and the second state, and second information for indicating switching of the cell between the non-energy-saving state and at least one of the energy-saving states.

In some embodiments, when the indication information includes the first information, the network device may dynamically indicate to the UE connected to the cell or the UE camping on the cell via a common signal that the cell switches to the first state (TX inactive) or switches to the second state (TX active), so that the UE learns the time when the cell stops or reduces transmitting downlink transmission and the time when the cell normally transmits downlink transmission.

In some embodiments, the first information may be transmitted via a layer 1 (L1) or layer 2 (L2) common signal, wherein the L1 or L2 common signal may be a dedicated L1 or L2 common signal used to indicate the switch of the cell between the first state and the second state. However, this disclosure is not limited thereto, and the first information may also be transmitted by other means.

In some embodiments, the first information may include information indicating that the cell enters the first state and information indicating that the cell enters the second state, or information indicating that the cell leaves the first state and information indicating that the cell leaves the second state.

In some embodiments, the first information may include information directly indicating the switch of the cell between the first state and the second state, or, when the cell supports BWPs, the first information may also include information indicating switching of the cell between a BWP supporting the first state and a BWP supporting the second state. For example, when the first information indicates that the UE switches to the BWP of the cell supporting the first state, the UE may deem that the cell is in the first state, and when the first information indicates that the UE switches to the BWP of the cell supporting the second state, the UE may deem that the cell is in the second state.

In some embodiments, when the indication information includes the second information, the network device may dynamically indicate via a common signal to the UE connected to the cell or the UE camping on the cell that the cell switches between different energy-saving states. That is, the energy-saving state switch indication (the second information) of the cell may be taken as the indication information for the first state and second state of the cell. Therefore, there is no need to add an information unit specifically indicating the switch between the first state and the second state.

In some embodiments, the energy-saving state switch indication (the second information) may include information for indicating that the cell is in one of the time-domain energy-saving state, the frequency-domain energy-saving state, the power domain energy-saving state and the spatial domain energy-saving state or a combination thereof. The energy-saving state switch indication (the second information) may be used to switch configuration parameters of the terminal equipment to configuration parameters supporting one of the time-domain energy-saving state, the frequency-domain energy-saving state, the power domain energy-saving state and the spatial domain energy-saving state or a combination thereof.

For example, when the energy-saving state switch indication indicates that the cell switches to an energy-saving state at least including stopping or reducing transmitting downlink (such as an energy-saving state stopping transmitting common signals, stopping transmitting common signals and UE-specific signals, or transmitting simplified common signals, and transmitting common signals at extended transmission periods), the cell is in the first state, and when the energy-saving state switch indication indicates that the cell switches to the energy-saving state normally transmitting or reducing transmitting downlink signals, the cell is in the second state.

In some embodiments, the energy-saving state switch indication may be a switch indication respectively for the time-domain energy-saving state, the frequency-domain energy-saving state, the power domain energy-saving state, or the spatial domain energy-saving state. The energy-saving state switch indication is used to switch configuration parameters of a cell or BWP to configuration parameters supporting the time-domain energy-saving state, the frequency-domain energy-saving state, the power domain energy-saving state, or the spatial domain energy-saving state.

In some embodiments, the energy-saving state switch indication may also be a switch indication simultaneously for the time-domain energy-saving state, the frequency-domain energy-saving state, the power domain energy-saving state, or the spatial energy-saving state. The energy-saving state switch indication is used to switch configuration parameters of a cell or BWP to configuration parameters simultaneously supporting more than one of the time-domain energy-saving state, the frequency-domain energy-saving state, the power domain energy-saving state, or the spatial domain energy-saving state.

In some embodiments, the energy-saving state switch indication may include information directly indicating the energy-saving state switch of the cell. Or, when the cell supports BWPs, the second information may also include information indicating switching of the cell between a non-energy saving BWP and at least one BWP that supports the energy-saving state.

In some embodiments, the second information may be transmitted via the common signal of L1 or L2; however, this disclosure is not limited thereto, and the second information may also be transmitted by other means.

In some embodiments, the common signal of L1 used for transmitting the first information and/or the second information may include a physical downlink control channel (PDCCH) scrambled by a network energy-saving identifier (NES-RNTI), and the common signal of L2 used for transmitting the first information and/or the second information may include an MAC control element (CE) (media access layer control unit)scheduled by the PDCCH scrambled by the NES-RNTI, wherein the NES-RNTI may be transmitted to the terminal equipment by system broadcast; however, this disclosure is not limited thereto, and the common signal of L1 or L2 may also be a common signal in other forms.

In some embodiments, the discontinuous transmission (DTX) may also be dynamically indicated by other means. For example, the indication information may include configuration information of the second timer, the configuration information of the second timer including a running time length (on-duration) of the second timer, wherein the cell is in the second state during running of the second timer; however, this disclosure is not limited thereto, and during the running of the second timer, the cell may also be in the first state. Following description shall be given by taking that the cell is in the second state during the running of the second timer as an example.

In some embodiments, the terminal equipment and the network device may simultaneously maintain the second timer. When a first preset condition is satisfied, the second timer is started or restarted, and during the running of the second timer, the cell switches to the second state. When a second preset condition is satisfied, the second timer is stopped, and when the second timer expires or is stopped, the cell switches to the first state.

In some embodiments, the first preset condition for starting or restarting the second timer may include at least one of the following: receiving a common signal from the cell, or receiving a dedicated signal of the terminal equipment from the cell.

When the indication information includes the configuration information of the second timer and the first information for indicating that the cell switches between the first state and the second state, or the second information for indicating that the cell switches between the non-energy-saving and at least one energy-saving state, the first preset condition for starting or restarting the second timer may further include at least one of the following: receiving the first information for indicating that the cell enters the second state, and receiving the second information for indicating that the cell enters the non-energy-saving state and/or the second energy-saving state.

In some embodiments, when the indication information includes the configuration information of the second timer and first information for indicating that the cell switches between the first state and the second state or the second information for indicating that the cell switches between the non-energy-saving and at least one energy-saving state, the second preset condition for stopping the second timer may include at least one of the following: receiving the first information for indicating that the cell enters the first state, and receiving the second information for indicating that the cell enters the first energy-saving state.

In some embodiments, the indication information including the configuration information of the second timer may be transmitted via a system broadcast message; however, this disclosure is not limited thereto, and the indication information may also be transmitted by other means.

In some embodiments, the indication information may include the configuration information of the first timer, or may include the first information and/or the second information, or may include the configuration information of the second timer. In addition, the indication information may also include a combination of more than one of the above information. For example, the indication information may include the configuration information of the first timer and the configuration information of the second timer, or the configuration information of the first timer and the first information and/or the second information, or the configuration information of the second timer and the first information and/or the second information, or the configuration information of the first timer, the first information and/or the second information and the configuration information of the second timer.

Taking that the indication information includes the configuration information of the first timer and the first information and/or the second information as an example:
when the indication information includes the configuration information of the first timer and the first information and/or the second information, the first timer is stopped when a third preset condition is satisfied. The third preset condition may include at least one of the following: receiving the first information indicating that the cell enters the first state, and receiving the second information indicating that the cell enters the first energy-saving state.

Taking that the indication information includes the configuration information of the first timer, the configuration information of the second timer and first information and/or the second information as an example:
when the indication information includes the configuration information of the first timer, the configuration information of the second timer and the first information and/or the second information, times when the cell is in the first state and the second state may be determined according to the configuration information of the first timer, the configuration information of the second timer and the first information and/or the second information. For example, the time when the cell is in the second state may include a duration of downlink transmission within a semi-statically configured period of discontinuous transmission (DTX on-duration), i.e. the on-duration of the first timer, and a time when the cell is in a TX active state triggered by dynamic signaling, i.e. the on-duration of the second timer.

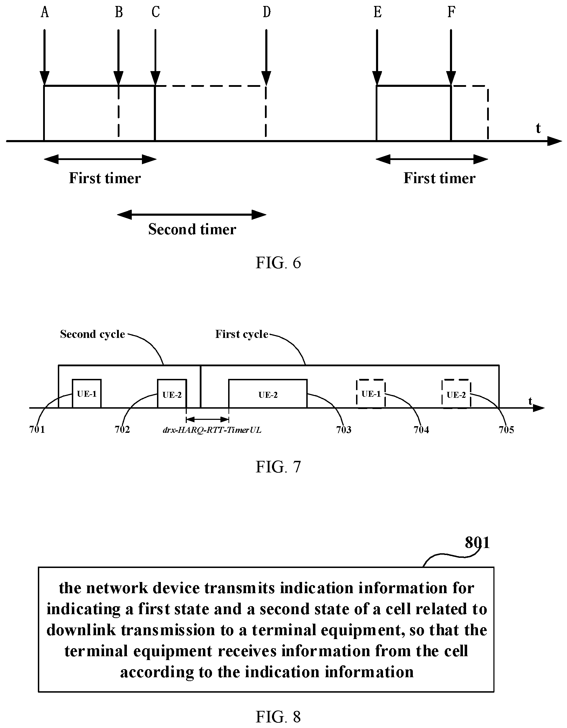

FIG. 6 is a schematic diagram of starting or stopping the first timer and the second timer of the embodiment of this disclosure. As shown in FIG. 6, at a time A, the first timer is started; at a time B, the UE receives the first information for indicating that the cell enters the second state or receives the second information for indicating that the cell enters the non-energy saving state and/or the second energy-saving state, and the second timer is started; at a time C, the first timer expires; at a time D, the second timer expires; at a time E, the first timer enters a next start-up period; and at a time F, the UE receives the first information for indicating that the cell enters the first state or receives the second information for indicating that the cell enters the first energy-saving state, and the first timer is stopped. In the above process, the cell may transmit downlink signals to the UE between time A and time D and between time E and time F, and at other times, the cell stops or reduces transmitting downlink signals.

In some embodiments, the indication information may be transmitted at a cell indicated by the indication information, or, the indication information may be transmitted at other cells in a network device to which the cell belongs, or, the indication information may be transmitted at other network devices adjacent to the network device to which the cell belongs.

For example, when the indication information is transmitted at the cell indicated by the indication information, the cell may transmit the indication information to the UE connected to or camping on the cell when the cell is in the second state; and in the case where the indication information is transmitted at other cells in the network device to which the cell belongs or at other network devices adjacent to the network device to which the cell belongs, the network device may transmit the indication information at various times.

In some embodiments, for some downlink signals, the terminal equipment may receive the downlink signals only in the second period during which the cell is in the second state. In this way, when the cell transmits discontinuously, not only energy consumption of network device may be saved, but also energy consumption of the terminal equipment may be saved. However, this disclosure is not limited thereto, and for some downlink signals, the terminal equipment may receive them in the first period during which the cell is in the first state and in the second period during which the cell is in the second state. In this way, user experiences may be ensured.

In some embodiments, the terminal equipment may receive system broadcasts, L1/L2 common signals, or paging messages from the cell in the second period during which the cell is in the second state, and does not receive system broadcasts, L1/L2 common signals, or paging messages from the cell in the first period during which the cell is in the first state.

In some embodiments, the terminal equipment may receive the dedicated signals of the terminal equipment from the cell in the second period during which the cell is in the second state, and does not receive dedicated signals of the terminal equipment from the cell in the first period during which the cell is in the first state.

In these embodiments, the dedicated signals of the terminal equipment may include a PDCCH for scheduling HARQ initial transmission data of the terminal equipment. That is, the terminal equipment receives the HARQ initial transmission data only in the second period during which the cell is in the second state.

In these embodiments, the terminal equipment supporting DRX (discontinuous reception) starts or restarts an on-duration timer (*drx-onDurationTimer*) when the following conditions are satisfied and the cell is in the second period: [(SFN × 10) + subframe number] modulo (drx-ShortCycle) = (drx-StartOffset) modulo (drx-ShortCycle),
where, SFN is a system frame number, *subframe number* is a subframe number, *drx-ShortCycle* is a discontinuous reception cycle (period), and *drx-StartOffset* is a time offset of discontinuous reception in the cycle (period);
the terminal equipment supporting DRX stops the *drx-onDurationTimer* timer at the end of the second period.

In these embodiments, the terminal equipment supporting DRX starts or restarts a discontinuous reception inactivity timer (*drx-InactivityTimer*) when it receives the PDCCH for scheduling the HARQ initial transmission data and the cell is in the second period;
and the terminal equipment supporting DRX stops the *drx-InactivityTimer* timer at the end of the second period.

In these embodiments, the terminal equipment starts a random access contention resolution timer (*ra-ContentionResolutionTimer*) when the following conditions are satisfied: the terminal equipment has transmitted msg3 of random access, and the cell is in the second period;
the terminal equipment stops *ra-ContentionResolutionTimer* at the end of the second period.

In some embodiments, in a case where the terminal equipment receives the PDCCH for scheduling the HARQ initial transmission data of the terminal equipment only in the second period, the terminal equipment may receive the PDCCH for scheduling HARQ retransmission data of the terminal equipment only in the second period during which the cell is in the second state. That is, the dedicated signals of the terminal equipment not only include the PDCCH used for scheduling the HARQ initial transmission data of the terminal equipment, but also include a PDCCH for scheduling the HARQ retransmission data of the terminal equipment. The terminal equipment receives the dedicated signals from the cell in the second period during which the cell is in the second state, and does not receive the dedicated signals from the cell in the first period during which the cell is in the first state.

In these embodiments, the terminal equipment supporting DRX starts a discontinuous reception downlink retransmission timer (*drx-RetransmissionTimeDL*) when the following conditions are satisfied: a downlink HARQ round-trip time timer (*drx-HARQ-RTT-TimerDL*) expires, the terminal equipment does no correctly decode HARQ data, and the cell is in the second period;
the terminal equipment supporting DRX stops *drx-RetransmissionTimeDL* and/or *drx-HARQ-RTT-TimerDL* at the end of the second period.

In these embodiments, the terminal equipment supporting DRX starts a discontinuous reception uplink retransmission timer (*drx-RetransmissionTimeUL*) when the following conditions are satisfied: an uplink HARQ round-trip time timer (*drx-HARQ-RTT-TimerUL*) expires, and the cell is in the second period;
the terminal equipment supporting DRX stops *drx-RetransmissionTimeUL* at the end of the second period.

For example, for a UE supporting DRX, *Drx-onDurationTimer, drx-InactivityTimer, drx-RetransmissionTimeDL* and *drx-RetransmissionTimeUL* may only be started or restarted in the first period, and are stopped at the end of the second period.

In some embodiments, in the case where the terminal equipment receives the PDCCH for scheduling the HARQ initial transmission data of the terminal equipment only in the second period, the terminal equipment may also receive the PDCCH for scheduling the HARQ retransmission data of the terminal equipment in the first period during which the cell is in the first state and the second period during which the cell is in the second state. That is, the terminal equipment receives the PDCCH for scheduling the HARQ initial transmission data of the terminal equipment only in the second period, and receives the PDCCH for scheduling the HARQ retransmission data of the terminal equipment in the first period and second period.

For example, for a UE supporting DRX, *Drx-onDurationTimer* and *drx-InactivityTimer* may be started or restarted only in the first period, and stopped at the end of the second period; and *drx-RetransmissionTimeDL* and *drx-RetransmissionTimeUL* may be started and restarted in the first period and the second period.

FIG. 7 is a schematic diagram of times of receiving the HARQ initial transmission data and HARQ retransmission data of the embodiment of this disclosure, showing cases where the HARQ initial transmission data are received only in the second period and the HARQ retransmission data are received in the first period and the second period. As shown in FIG. 7, in the second period during which the cell is in the second state, UE-1 and UE-2 may receive HARQ initial transmission data 701 and 702. In the first period during which the cell is in the first state, when UE-2 has HARQ retransmission data 703, UE-2 may receive the HARQ retransmission data in the second period. In the first period during which the cell is in the first state, UE-1 and UE-2 do not receive HARQ initial transmission data 704 and 705.

However, this disclosure is not limited thereto, and the terminal equipment may also receive the PDCCH for scheduling the HARQ initial transmission data the terminal equipment and the PDCCH for scheduling the HARQ retransmission data of the terminal equipment in the first period and the second period.

In some embodiments, the terminal equipment receives a random access response (RAR) from the cell in the second period during which the cell is in the second state, and does not receive a random access response (RAR) from the cell in the first period during which the cell is in the first state.

In these embodiments, the terminal equipment starts a random access response reception timer when the following conditions are satisfied: msg1 or MsgA of random access has been transmitted, and the cell is in the second period; and the terminal equipment stops the random access response reception timer at the end of the second period.

For example, if the RAR may be received only in the second period, in this case, the UE may initiate random access only in the second period, and ra-ResponseWindow and msgB-ResponseWindow may be started only in the second period.

However, this disclosure is not limited thereto, and the RAR may also be received in the first period and the second period. In this case, the UE may initiate random access in the first period and the second period, and ra-ResponseWindow and msgB-ResponseWindow may be started in the first period and the second period.

In some embodiments, in the second period during which the cell is in the second state, CSI-RS measurement, radio resource management (RRM) measurement, radio link monitoring (RLM) or beam failure detection (BFD) are performed; and in the first period during which the cell is in the first state, no radio resource management (RRM) measurement, radio link monitoring (RLM) or beam failure detection (BFD) is performed.

In these embodiments, reference signals (such as an SS, a CSI-RS, and a DRS) may be received only in the second period, in which case the UE may perform CSI-RS measurement, RRM measurement, RLM or BFD only in the second period.

However, this disclosure is not limited thereto, and the reference signals (such as an SS, a CSI-RS, and a DRS) may also be received in the first period and the second period, in which case the UE may perform CSI-RS measurement, RRM measurement, RLM or BFD in the first period and the second period.

The embodiments of this disclosure are exemplified above. However, this disclosure is not limited thereto, and appropriate variants may be made on the basis of these embodiments. For example, the above embodiments may be executed separately, or one or more of them may be executed in a combined manner.

It can be seen from the above embodiments that the terminal equipment may receive the indication information for indicating the first state and the second state of the cell to which the terminal equipment is connected or where the terminal equipment is camped related to downlink transmission, and receive the information from the cell according to the indication information, and the cell may switch between different states related to the downlink transmission. Hence, energy consumption overhead of the network device may be saved, and the terminal equipment camped on the cell or connected to the cell may receive information from the cell according to the indication information for indicating the first state and the second state of the cell. Thus, when the cell switches between the first state and the second state, the terminal equipment does not necessarily switch over to another cell, and a terminal equipment originally camped on the cell does not necessarily perform cell reselection, thereby avoiding generation of service interruption and increase of load level of a neighbor cell due to migration of the terminal equipment of the cell in the energy-saving state to the neighbor cell, and ensuring that user experiences are not lowered when the cell enters the energy-saving state.

### Embodiment of a second aspect

The embodiment of this disclosure provides an information processing method. This method is processing at a network side device corresponding to the method in the embodiment of the first aspect, and contents identical to those in the embodiment of the first aspect shall not be repeated herein any further.

FIG. 8 is a schematic diagram of the information processing method of the embodiment of this disclosure, applicable to a network device. As shown in FIG. 8, the method includes:
801: the network device transmits indication information for indicating a first state and a second state of a cell related to downlink transmission to a terminal equipment, so that the terminal equipment receives information from the cell according to the indication information, the cell being a cell where the terminal equipment is camped or a cell to which the terminal equipment is connected.

It should be noted that FIG. 3 only schematically illustrates the embodiment of this disclosure; however, this disclosure is not limited thereto. For example, some other steps may be added, or some steps therein may be reduced. And appropriate variants may be made by those skilled in the art according to the above contents, without being limited to what is contained in FIG. 3.

In some embodiments, downlink signals transmitted when the cell is in the first state may be less than downlink signal transmitted when the cell is in the second state.

In some embodiments, the first state includes a first energy-saving state, and the second state includes a non-energy-saving state and/or a second energy-saving state; or, the first state includes the first energy-saving state and/or the second energy-saving state, and the second state includes a non-energy-saving state; wherein downlink signals transmitted when the cell is in the first energy-saving state are less than downlink signals transmitted when the cell is in the second energy-saving state.

In some embodiments, the first energy-saving state includes a first time-domain energy-saving state, or a combination of the first time-domain energy-saving state, a frequency-domain energy-saving state, a spatial domain energy-saving state and a power domain energy-saving state, wherein the first time-domain energy-saving state includes at least one of the following: stopping transmitting a common signal and stopping transmitting a common signal and a UE-specific signal.

In some embodiments, the second energy-saving state includes at least one of a second time-domain energy-saving state, a frequency-domain energy-saving state, a spatial domain energy-saving state and a power domain energy-saving state or a combination thereof, wherein the second time-domain energy-saving state includes at least one of the following: transmitting a common signal at an extended transmission period, transmitting a simplified common signal, and normally transmitting a downlink signal and stopping or reducing receiving an uplink signal.

In some embodiments, the simplified common signal includes a synchronization signal block (SSB) excluding a master information block (MIB) or a physical broadcast channel (PBCH), or includes a discovery reference signal (DRS) including a synchronization reference signal (SS).

In some embodiments, the frequency-domain energy-saving state includes reducing a service bandwidth; and/or, the spatial domain energy-saving state includes at least one of the following: reducing the number of antenna elements or radio frequency transceiving units (TxRUs); reducing the number of transmitted analog beams; reducing the number of transmit antenna ports of a channel state information reference signal (CSI-RS) (the number of digital beam-forming ports); and reducing the number of transmission reception points; and/or, the power domain energy-saving state includes at least one of the following: reducing transmit power of a downlink reference signal or a common signal; and reducing transmit power of a data channel.

In some embodiments, the indication information includes configuration information of a first timer, the configuration information of the first timer including at least one of the following:
a running time length of the first timer, a start-up time offset of the first timer, and a start-up period of the first timer;
wherein during the on-duration of the first timer, the cell is in the second state.

In some embodiments, the configuration information of the first timer is represented by at least one of the following:
a time length, a period and an offset in the period during which the cell is in the non-energy-saving state;
a time length, a period and an offset in the period during which the cell is in the first energy-saving state; and
a time length, a period and an offset in the period during which the cell is in the second energy-saving state.

In some embodiments, the indication information includes configuration information of a second timer, the configuration information of the second timer including a running time length of the second timer, wherein the cell is in the second state during running of the second timer.

In some embodiments, a start-up condition of the second timer includes:
transmitting a common signal at the cell, or
transmitting a dedicated signal of the terminal equipment at the cell.

In some embodiments, the indication information further includes at least one of the following:
first information for indicating switching of the cell between the first state and the second state; and
second information for indicating switching of the cell between the non-energy-saving state and at least one of the energy-saving states.

In some embodiments, the second information includes information indicating that the cell is in one of the time-domain energy-saving state, the frequency-domain energy-saving state, the power domain energy-saving state and the spatial domain energy-saving state or a combination thereof.

In some embodiments, the second information is used to switch configuration parameters of the terminal equipment to configuration parameters supporting one of the time-domain energy-saving state, the frequency-domain energy-saving state, the power domain energy-saving state and the spatial domain energy-saving state or a combination thereof.

In some embodiments, the first information is used to indicate that the cell switches between a BWP supporting the first state and a BWP supporting the second state;
and the second information is used to indicate that the cell switches between a non-energy-saving BWP and at least one BWP supporting the energy-saving state.

In some embodiments, the first information and/or the second information is/are transmitted via a common signal of L1 or L2.

In some embodiments, the common signal of L1 includes a PDCCH scrambled by a network energy-saving identifier (NES-RNTI), and the common signal of L2 includes an MAC control element (CE) scheduled by the PDCCH scrambled by the NES-RNTI, wherein the NES-RNTI is transmitted to the terminal equipment by system broadcast.

In some embodiments, the condition for starting the second timer includes at least one of the following:
transmitting the first information for indicating that the cell enters the second state; and
transmitting the second information for indicating that the cell enters the non-energy-saving state and/or the second energy-saving state.

In some embodiments, the condition for stopping the first timer or the second timer includes at least one of the following:
transmitting the first information indicating that the cell enters the first state; and
transmitting second information indicating that the cell enters the first energy-saving state.

In some embodiments, the configuration information of the first timer and/or the configuration information of the second timer is/are transmitted via a system broadcast message.

In some embodiments, the indication information is transmitted at the cell, or, the indication information is transmitted at other cells in a network device to which the cell belongs, or, the indication information is transmitted at other network devices adjacent to the network device to which the cell belongs.

In some embodiments, system broadcasts, L1/L2 common signals, or paging messages are transmitted at the cell in the second period during which the cell is in the second state,
and system broadcasts, L1/L2 common signals, or paging messages are not transmitted at the cell in the first period during which the cell is in the first state.

In some embodiments, the dedicated signals of the terminal equipment are transmitted at the cell in the second period during which the cell is in the second state,
and the dedicated signals of the terminal equipment are not transmitted at the cell in the first period during which the cell is in the first state.

In some embodiments, the dedicated signals of the terminal equipment include a PDCCH for scheduling HARQ initial transmission data of the terminal equipment.

In some embodiments, the dedicated signals of the terminal equipment further include a PDCCH for scheduling HARQ retransmission data of the terminal equipment.

In some embodiments, in the second period during which the cell is in the second state, a random access response (RAR) is transmitted at the cell;
and in the first period during which the cell is in the first state, no random access response (RAR) is transmitted at the cell.

The embodiments of this disclosure are exemplified above. However, this disclosure is not limited thereto, and appropriate variants may be made on the basis of these embodiments. For example, the above embodiments may be executed separately, or one or more of them may be executed in a combined manner.

It can be seen from the above embodiments that the terminal equipment may receive the indication information for indicating the first state and the second state of the cell to which the terminal equipment is connected or where the terminal equipment is camped related to downlink transmission, and receive the information from the cell according to the indication information, and the cell may switch between different states related to the downlink transmission. Hence, energy consumption overhead of the network device may be saved, and the terminal equipment camped on the cell or connected to the cell may receive information from the cell according to the indication information for indicating the first state and the second state of the cell. Thus, when the cell switches between the first state and the second state, the terminal equipment does not necessarily switch over to another cell, and a terminal equipment originally camped on the cell does not necessarily perform cell reselection, thereby avoiding generation of service interruption and increase of load level of a neighbor cell due to migration of the terminal equipment of the cell in the energy-saving state to the neighbor cell, and ensuring that user experiences are not lowered when the cell enters the energy-saving state.

### Embodiment of a third aspect

The embodiment of this disclosure provides an information processing apparatus. The apparatus may be, for example, a terminal equipment, or one or some components or assemblies configured in the terminal equipment. The apparatus in this embodiment corresponds to the method in the embodiment of the first aspect, with contents in this embodiment identical to those in the embodiment of the first aspect being not going to be described herein any further.

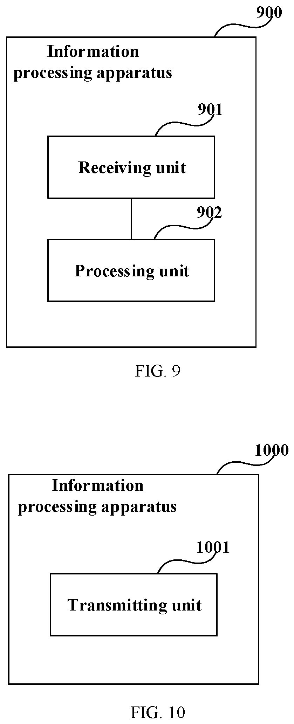

FIG. 9 is a schematic diagram of the information processing apparatus of the embodiment of this disclosure. As shown in FIG. 9, the information processing apparatus 900 includes a receiving unit 901 and a processing unit 902.

The receiving unit 901 is configured to receive indication information for indicating a first state and a second state of a cell related to downlink transmission.

The processing unit 902 is configured to receive information from the cell according to the indication information, wherein the cell is a cell where the terminal equipment is camped or a cell to which the terminal equipment is connected.

In some embodiments, downlink signals transmitted when the cell is in the first state are less than downlink signals transmitted when the cell is in the second state.

In some embodiments, the first state includes a first energy-saving state, and the second state includes a non-energy-saving state and/or a second energy-saving state; or,
the first state includes a first energy-saving state and/or a second energy-saving state, and the second state includes a non-energy-saving state;
wherein downlink signals transmitted when the cell is in the first energy-saving state are less than downlink signals transmitted when the cell is in the second energy-saving state.

In some embodiments, the first energy-saving state includes a first time-domain energy-saving state, or a combination of the first time-domain energy-saving state with at least one of a frequency-domain energy-saving state, a spatial domain energy-saving state and a power domain energy-saving state, wherein the first time-domain energy-saving state includes at least one of stopping transmitting a common signal and stopping transmitting a common signal and a terminal equipment specific signal; and/or
the second energy-saving state includes at least one or a combination of the second time-domain energy-saving state, the frequency-domain energy-saving state, the spatial domain energy-saving state and the power domain energy-saving state, wherein the second time-domain energy-saving state includes at least one of transmitting a common signal at an extended transmission period, transmitting a simplified common signal, and normally transmitting a downlink signal and stopping or reducing receiving an uplink signal.

In some embodiments, the simplified common signal includes a synchronization signal block (SSB) excluding a master information block (MIB) or a physical broadcast channel (PBCH), or a discovery reference signal (DRS) including a synchronization reference signal; and/or,
the frequency-domain energy-saving state includes reducing a service bandwidth; and/or,
the spatial energy-saving state includes at least one of reducing the number of antenna elements or radio frequency transceiving units (TxRUs), reducing the number of transmitted analog beams, reducing the number of transmit antenna ports (the number of digital beam-forming ports) of a CSI-RS and reducing the number of transmission reception points (TRPs); and/or,
the power domain energy-saving state includes at least one of reducing transmit power of a downlink reference signal or a common signal and reducing transmit power of a data channel.

In some embodiments, the indication information includes configuration information of a first timer, the configuration information of the first timer including at least one of the following: a running time length of the first timer, a start-up time offset of the first timer, and a start-up period of the first timer, wherein the cell is in the second state during running of the first timer; and/or,
the indication information includes configuration information of a second timer, the configuration information of the second timer including a running time length of the second timer, wherein the cell is in the second state during running of the second timer; and/or,
the indication information includes at least one of first information for indicating switching of the cell between the first state and the second state, and second information for indicating switching of the cell between the non-energy-saving state and at least one of the energy-saving states.

In some embodiments, the receiving unit 901 obtains the configuration information of the first timer via at least one of the following:
a time length, a period and an offset in the period during which the cell is in the non-energy-saving state;
a time length, a period and an offset in the period during which the cell is in the first energy-saving state; and
a time length, a period and an offset in the period during which the cell is in the second energy-saving state.

In some embodiments, a start-up condition of the second timer includes at least one of the following:
receiving a common signal from the cell;
receiving a specific signal of the terminal equipment from the cell;
receiving first information indicating that the cell enters the second state; and
receiving second information indicating that the cell enters the non-energy-saving state and/or the second energy-saving state;
   and/or,
a stopping condition of the first timer or the second timer includes at least one of the following:
   receiving first information indicating that the cell enters the first state; and
   receiving second information indicating that the cell enters the first energy-saving state.

In some embodiments, the second information includes information for indicating that the cell is in one of the time-domain energy-saving state, frequency-domain energy-saving state, power domain energy-saving state and spatial energy-saving state or a combination thereof, and/or includes a configuration parameter for switching a configuration parameter of the terminal equipment to supporting one of the time-domain energy-saving state, frequency-domain energy-saving state, power domain energy-saving state and spatial energy-saving state or a combination thereof, and/or includes information for indicating that the cell switches between a non-energy-saving bandwidth part and at least one bandwidth part supporting the energy-saving state; and/or,
the first information includes information for indicating that the cell switches between a bandwidth part supporting the first state and a bandwidth part supporting the second state.

In some embodiments, the configuration information of the first timer and/or the configuration information of the second timer is/are transmitted via a system broadcast message; and/or,
the first information and/or the second information is/are transmitted via a layer 1 or layer 2 common signal.

In some embodiments, the common signal of layer 1 includes a PDCCH scrambled by a network energy-saving identifier (NES-RNTI), and the common signal of layer 2 includes an MAC control element scheduled by a PDCCH scrambled by the NES-RNTI, wherein the NES-RNTI is transmitted to the terminal equipment by system broadcast.

In some embodiments, the indication information is transmitted at the cell, or the indication information is transmitted at another cell in a network device to which the cell belongs, or the indication information is transmitted at another network device adjacent to the network device to which the cell belongs.

In some embodiments, the processing unit 902 receives system broadcast, a layer 1/layer 2 common signals or a paging message from the cell in a second period during which the cell is in the second state, and the processing unit 902 does not receive system broadcast, a layer 1 or layer 2 common signal or a paging message from the cell in a first period during which the cell is in the first state; and/or
the processing unit 902 receives a specific signal of the terminal equipment from the cell in the second period during which the cell is in the second state, and the processing unit does not receive a specific signal of the terminal equipment from the cell in the first period during which the cell is in the first state; and/or
the processing unit 902 receives a random access response from the cell in the second period during which the cell is in the second state, and the processing unit does not receive a random access response from the cell in the first period during which the cell is in the first state; and/or
the processing unit 902 performs channel state information reference signal measurement, radio resource management measurement, radio link monitoring or beam failure detection in the second period during which the cell is in the second state, and the processing unit does not perform channel state information reference signal measurement, radio resource management measurement, radio link monitoring or beam failure detection in the first period during which the cell is in the first state.

In some embodiments, the specific signal of the terminal equipment includes a PDCCH for scheduling a hybrid automatic repeat request (HARQ) initial transmission data of the terminal equipment.

In some embodiments, the processing unit 902 starts or restarts a *drx-onDurationTimer* timer when the following condition is satisfied and the cell is in the second period: [(SFN × 10) + subframe number] modulo (*drx-ShortCycle*) = (*drx-StartOffset*) modulo (*drx-ShortCycle*); where, *SFN* is a system frame number, *subframe number* is a subframe number, *drx-ShortCycle* is a period of discontinuous reception, and *drx-StartOffset* is a time offset of the discontinuous reception within the period; and the processing unit 902 stops the *drx-onDurationTimer* timer at the end of the second period;
and/or
the processing unit 902 starts or restarts a discontinuous reception inactivity timer (*drx-InactivityTimer*) upon receiving the PDCCH for scheduling a hybrid automatic repeat request initial transmission data and the cell is in the second period, and the processing unit 902 stops the *drx-InactivityTimer* timer at the end of the second period;
   and/or
the processing unit 902 starts a random access contention resolution timer (*ra-ContentionResolutionTimer*) when the following conditions are satisfied: msg3 of random access is transmitted, and the cell is in the second period; and the processing unit 902 stops the *ra-ContentionResolutionTimer* timer at the end of the second period.

In some embodiments, the specific signal of the terminal equipment further includes a PDCCH for scheduling HARQ retransmission data of the terminal equipment.

In some embodiments, the processing unit 902 starts a discontinuous downlink retransmission timer (*drx-RetransmissionTimeDL*) when the following conditions are satisfied: a downlink HARQ round-trip time timer (*drx-HARQ-RTT-TimerDL*) expires, HARQ data are not decoded correctly, and the cell is in the second period; and the processing unit 902 stops the *drx-HARQ-RTT-TimerDL* timer at the end of the second period;
and/or
the processing unit 902 starts a discontinuous reception uplink retransmission timer (*drx-RetransmissionTimeUL*) when the following conditions are satisfied: an uplink HARQ round-trip time timer (*drx-HARQ-RTT-TimerUL*) expires, and the cell is in the second period; and the processing unit 902 stops the *drx-RetransmissionTimeUL* timer at the end of the second period.

In some embodiments, the processing unit 902 starts a random access response reception timer when the following conditions are satisfied: msg1 or MsgA of random access is transmitted, and the cell is in the second period;
and the processing unit 902 stops the random access response reception timer at the end of the second period.

The embodiments of this disclosure are exemplified above. However, this disclosure is not limited thereto, and appropriate variants may be made on the basis of these embodiments. For example, the above embodiments may be executed separately, or one or more of them may be executed in a combined manner.

It should be noted that the components or modules related to this disclosure are only described above. However, this disclosure is not limited thereto, and the information processing apparatus 900 may further include other components or modules, and reference may be made to related techniques for particulars of these components or modules. Furthermore, the above components or modules may be implemented by hardware, such as a processor, a memory, a transmitter, and a receiver, etc., which are not limited in the embodiment of this disclosure.

It can be seen from the above embodiments that the terminal equipment may receive the indication information for indicating the first state and the second state of the cell to which the terminal equipment is connected or where the terminal equipment is camped related to downlink transmission, and receive the information from the cell according to the indication information, and the cell may switch between different states related to the downlink transmission. Hence, energy consumption overhead of the network device may be saved, and the terminal equipment camped on the cell or connected to the cell may receive information from the cell according to the indication information for indicating the first state and the second state of the cell. Thus, when the cell switches between the first state and the second state, the terminal equipment does not necessarily switch over to another cell, and a terminal equipment originally camped on the cell does not necessarily perform cell reselection, thereby avoiding generation of service interruption and increase of load level of a neighbor cell due to migration of the terminal equipment of the cell in the energy-saving state to the neighbor cell, and ensuring that user experiences are not lowered when the cell enters the energy-saving state.

### Embodiment of a fourth aspect

The embodiment of this disclosure provides an information processing apparatus. The apparatus may be, for example, a network device, or one or some components or assemblies configured in the network device. The apparatus in this embodiment corresponds to the method in the embodiment of the second aspect, with contents in this embodiment identical to those in the embodiment of the second aspect being not going to be described herein any further.

FIG. 10 is a schematic diagram of the information processing apparatus of the embodiment of this disclosure. As shown in FIG. 10, the information processing apparatus 1000 includes a transmitting unit 1001.

The transmitting unit 1001 is configured to transmit indication information for indicating a first state and a second state of a cell related to downlink transmission to a terminal equipment, so that the terminal equipment receives information from the cell according to the indication information, wherein the cell is a cell where the terminal equipment is camped or a cell to which the terminal equipment is connected.

In some embodiments, downlink signals transmitted when the cell is in the first state are less than downlink signals transmitted when the cell is in the second state.

In some embodiments, the first state includes a first energy-saving state, and the second state includes a non-energy-saving state and/or a second energy-saving state; or,
the first state includes a first energy-saving state and/or a second energy-saving state, and the second state includes a non-energy-saving state;
wherein downlink signals transmitted when the cell is in the first energy-saving state are less than downlink signals transmitted when the cell is in the second energy-saving state.

In some embodiments, the first energy-saving state includes a first time-domain energy-saving state, or a combination of the first time-domain energy-saving state with at least one of a frequency-domain energy-saving state, a spatial domain energy-saving state and a power domain energy-saving state,
wherein the first time-domain energy-saving state includes at least one of stopping transmitting a common signal and stopping transmitting a common signal and a UE-specific signal.

In some embodiments, the second energy-saving state includes at least one or a combination of the second time-domain energy-saving state, the frequency-domain energy-saving state, the spatial domain energy-saving state and the power domain energy-saving state,
wherein the second time-domain energy-saving state includes at least one of transmitting a common signal at an extended transmission period, transmitting a simplified common signal, and normally transmitting a downlink signal and stopping or reducing receiving an uplink signal.

In some embodiments, the simplified common signal includes:
a synchronization signal block (SSB) excluding a master information block (MIB) or a physical broadcast channel (PBCH), or a discovery reference signal (DRS) including a synchronization reference signal.

In some embodiments, the frequency-domain energy-saving state includes reducing a service bandwidth; and/or,
the spatial energy-saving state includes at least one of reducing the number of antenna elements or radio frequency transceiving units (TxRUs), reducing the number of transmitted analog beams, reducing the number of transmit antenna ports (the number of digital beam-forming ports) of a CSI-RS and reducing the number of transmission reception points (TRPs); and/or,
the power domain energy-saving state includes at least one of reducing transmit power of a downlink reference signal or a common signal and reducing transmit power of a data channel.

In some embodiments, the indication information includes configuration information of a first timer, the configuration information of the first timer including at least one of the following:
a running time length of the first timer, a start-up time offset of the first timer, and a start-up period of the first timer,
wherein the cell is in the second state during running of the first timer.

In some embodiments, the configuration information of the first timer is represented by at least one of the following:
a time length, a period and an offset in the period during which the cell is in the non-energy-saving state;
a time length, a period and an offset in the period during which the cell is in the first energy-saving state; and
   --a time length, a period and an offset in the period during which the cell is in the second energy-saving state.

In some embodiments, the indication information includes configuration information of a second timer, the configuration information of the second timer including a running time length of the second timer, wherein the cell is in the second state during running of the second timer.

In some embodiments, a start-up condition of the second timer includes:
transmitting a common signal at the cell, or
transmitting a dedicated signal of the terminal equipment at the cell.

In some embodiments, the indication information further includes at least one of the following:
first information for indicating switching of the cell between the first state and the second state; and
second information for indicating switching of the cell between the non-energy-saving state and at least one of the energy-saving states.

In some embodiments, the second information includes information for indicating that the cell is in one of the time-domain energy-saving state, frequency-domain energy-saving state, power domain energy-saving state and spatial energy-saving state or a combination thereof

In some embodiments, the second information includes information is used for switching a configuration parameter of the terminal equipment to a configuration parameter supporting one of the time-domain energy-saving state, frequency-domain energy-saving state, power domain energy-saving state and spatial energy-saving state or a combination thereof.

In some embodiments, the first information is used to indicate that the cell switches between a BWP supporting the first state and a BWP supporting the second state;
and the second information is used to indicate that the cell switches between a non-energy-saving BWP and at least one BWP supporting the energy-saving state.

In some embodiments, the first information and/or the second information is/are transmitted via a common signal of L1 or L2.

In some embodiments, the common signal of L1 includes a PDCCH scrambled by a network energy-saving identifier (NES-RNTI), and the common signal of L2 includes an MAC control element (CE) scheduled by the PDCCH scrambled by the NES-RNTI, wherein the NES-RNTI is transmitted to the terminal equipment by system broadcast.

In some embodiments, the condition for starting the second timer includes at least one of the following:
transmitting the first information for indicating that the cell enters the second state; and
transmitting the second information for indicating that the cell enters the non-energy-saving state and/or the second energy-saving state.

In some embodiments, the condition for stopping the first timer or the second timer includes at least one of the following:
transmitting the first information indicating that the cell enters the first state; and
transmitting second information indicating that the cell enters the first energy-saving state.

In some embodiments, the configuration information of the first timer and/or the configuration information of the second timer is/are transmitted via a system broadcast message.

In some embodiments, the indication information is transmitted at the cell, or, the indication information is transmitted at other cells in a network device to which the cell belongs, or, the indication information is transmitted at other network devices adjacent to the network device to which the cell belongs.

In some embodiments, the transmitting unit 1001 transmits system broadcasts, L1/L2 common signals, or paging messages at the cell in the second period during which the cell is in the second state,
and the transmitting unit 1001 does not transmit system broadcasts, L1/L2 common signals, or paging messages at the cell in the first period during which the cell is in the first state.

In some embodiments, the transmitting unit 1001 transmits the dedicated signals of the terminal equipment at the cell in the second period during which the cell is in the second state,
and the transmitting unit 1001 does not transmit the dedicated signals of the terminal equipment at the cell in the first period during which the cell is in the first state.

In some embodiments, the dedicated signals of the terminal equipment include a PDCCH for scheduling HARQ initial transmission data of the terminal equipment.

In some embodiments, the dedicated signals of the terminal equipment further include a PDCCH for scheduling HARQ retransmission data of the terminal equipment.

In some embodiments, in the second period during which the cell is in the second state, the transmitting unit 1001 transmits a random access response (RAR) at the cell;
and in the first period during which the cell is in the first state, the transmitting unit 1001 does not transmit a random access response (RAR) at the cell.

The embodiments of this disclosure are exemplified above. However, this disclosure is not limited thereto, and appropriate variants may be made on the basis of these embodiments. For example, the above embodiments may be executed separately, or one or more of them may be executed in a combined manner.

It should be noted that the components or modules related to this disclosure are only described above. However, this disclosure is not limited thereto, and the information processing apparatuses 800-1000 may further include other components or modules, and reference may be made to related techniques for particulars of these components or modules. Furthermore, the above components or modules may be implemented by hardware, such as a processor, a memory, a transmitter, and a receiver, etc., which are not limited in the embodiment of this disclosure.

It can be seen from the above embodiments that the terminal equipment may receive the indication information for indicating the first state and the second state of the cell to which the terminal equipment is connected or where the terminal equipment is camped related to downlink transmission, and receive the information from the cell according to the indication information, and the cell may switch between different states related to the downlink transmission. Hence, energy consumption overhead of the network device may be saved, and the terminal equipment camped on the cell or connected to the cell may receive information from the cell according to the indication information for indicating the first state and the second state of the cell. Thus, when the cell switches between the first state and the second state, the terminal equipment does not necessarily switch over to another cell, and a terminal equipment originally camped on the cell does not necessarily perform cell reselection, thereby avoiding generation of service interruption and increase of load level of a neighbor cell due to migration of the terminal equipment of the cell in the energy-saving state to the neighbor cell, and ensuring that user experiences are not lowered when the cell enters the energy-saving state.

### Embodiment of a fifth aspect

The embodiment of this disclosure provides a communication system, including a network device and a terminal equipment.

In some embodiments, the terminal equipment includes the apparatus described in the embodiment of the third aspect, and is configured to carry out the method described in the embodiment of the first aspect. As the method has been described in detail in the embodiment of the first aspect, the contents of which are incorporated herein, and shall not be described herein any further.

In some embodiments, the network device includes the apparatus described in the embodiment of the fourth aspect, and is configured to carry out the method described in the embodiment of the second aspect. As the method has been described in detail in the embodiment of the second aspect, the contents of which are incorporated herein, and shall not be described herein any further.

The embodiment of this disclosure further provides a terminal equipment, such as a UE.

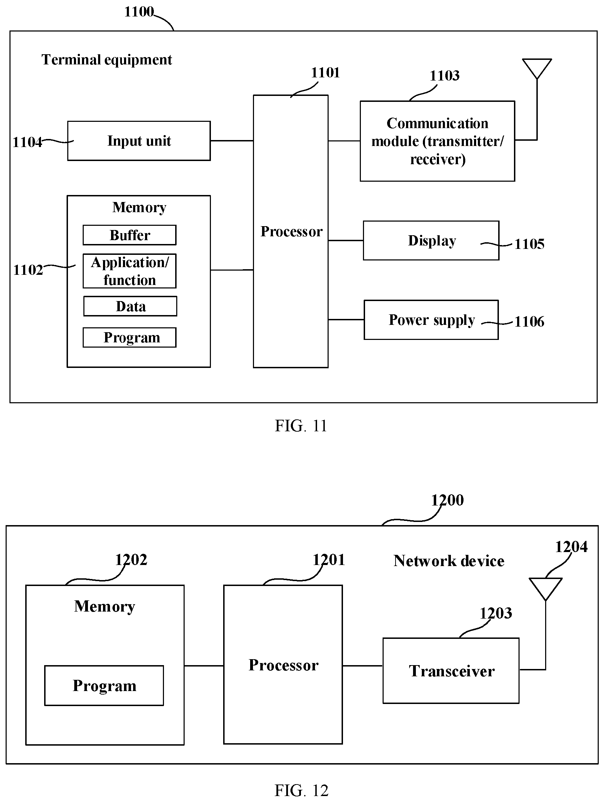

FIG. 11 is a schematic diagram of the terminal equipment of the embodiment of this disclosure. As shown in FIG. 11, the terminal equipment 1100 may include a processor 1101 and a memory 1102, the memory 1102 storing data and a program and being coupled to the processor 1101. It should be noted that this figure is illustrative only, and other types of structures may also be used, so as to supplement or replace this structure and achieve a telecommunications function or other functions.

In some embodiments, the functions of the apparatus described in the embodiment of the third aspect may be integrated into the processor 1101, and the processor 1301 may be configured to execute a program to carry out the method described in the embodiment of the first aspect, the contents of which being incorporated herein, which shall not be described herein any further.

In some other embodiments, the apparatus described in the embodiment of the third aspect and the processor 1101 may be configured separately; for example, the apparatus described in the embodiment of the third aspect may be configured as a chip connected to the processor 1101, and the functions of the apparatus described in the embodiment of the third aspect are executed under control of the processor 1101.

As shown in FIG. 11, the terminal equipment 1100 may further include a communication module 1103, an input unit 1104, a display 1105, and a power supply 1160; wherein functions of the above components are similar to those in the prior art, which shall not be described herein any further. It should be noted that the terminal equipment 1100 does not necessarily include all the parts shown in FIG. 11, and the above components are not necessary. Furthermore, the terminal equipment 1100 may include parts not shown in FIG. 11, and the prior art may be referred to.

The embodiment of this disclosure further provides a network device, which may be, for example, a gNB (a base station in NR), etc.

FIG. 12 is a schematic diagram of the network device of the embodiment of this disclosure. As shown in FIG. 12, the network device 1200 may include a central processing unit (CPU) 1201 and a memory 1202, the memory 1202 being coupled to the central processing unit 1201. Wherein, the memory 1202 may store various data, and furthermore, it may store a program for information processing, and execute the program under control of the central processing unit 1201, so as to receive various information transmitted by a terminal equipment, and transmit various information to the terminal equipment.

In some embodiments, the functions of the apparatus described in the embodiment of the fourth aspect may be integrated into the central processing unit 1201, and the central processing unit 1201 may be configured to carry out the method described in the embodiment of the second aspect, the contents of which being incorporated herein, which shall not be described herein any further.

In some other embodiments, the apparatus described in the embodiment of the fourth aspect and the central processing unit 1201 may be configured separately; for example, the apparatus described in the embodiment of the fourth aspect may be configured as a chip connected to the central processing unit 1201, and the functions of the apparatus described in the embodiment of the fourth aspect are executed under control of the central processing unit 1201.

Furthermore, as shown in FIG. 12, the network device 1200 may include a transceiver 1203, and an antenna 1204, etc. Wherein, functions of the above components are similar to those in the prior art, and shall not be described herein any further. It should be noted that the network device 1200 does not necessarily include all the parts shown in FIG. 12, and furthermore, the network device 1200 may include parts not shown in FIG. 12, and the prior art may be referred to.

An embodiment of this disclosure provides a computer readable program code, which, when executed in a terminal equipment, will cause the terminal equipment to carry out the method as described in the embodiment of the first aspect.

An embodiment of this disclosure provides a computer readable medium, including a computer readable program code, which will cause a terminal equipment to carry out the method as described in the embodiment of the first aspect.

An embodiment of this disclosure provides a computer readable program code, which, when executed in a network device, will cause the network device to carry out the method as described in the embodiment of the second aspect.

An embodiment of this disclosure provides a computer readable medium, including a computer readable program code, which will cause a network device to carry out the method as described in the embodiment of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.

A terminal equipment side
1. An information processing method, applicable to a terminal equipment, characterized in that the method includes:
   receiving indication information for indicating a first state and a second state of a cell related to downlink transmission; and
   receiving information from the cell according to the indication information,
   wherein the cell is a cell where the terminal equipment is camped or a cell to which the terminal equipment is connected.
2. The method according to supplement 1, wherein,
   downlink signals transmitted when the cell is in the first state are less than downlink signals transmitted when the cell is in the second state.
3. The method according to supplement 1 or 2, wherein,
   the first state includes a first energy-saving state, and the second state includes a non-energy-saving state and/or a second energy-saving state; or,
   the first state includes a first energy-saving state and/or a second energy-saving state, and the second state includes a non-energy-saving state;
   wherein downlink signals transmitted when the cell is in the first energy-saving state are less than downlink signals transmitted when the cell is in the second energy-saving state.
4. The method according to supplement 3, wherein,
   the first energy-saving state includes a first time-domain energy-saving state, or a combination of the first time-domain energy-saving state with at least one of a frequency-domain energy-saving state, a spatial domain energy-saving state and a power domain energy-saving state,
   wherein the first time-domain energy-saving state includes at least one of stopping transmitting a common signal and stopping transmitting a common signal and a terminal equipment specific signal.
5. The method according to supplement 3, wherein,
   the second energy-saving state includes at least one or a combination of the second time-domain energy-saving state, the frequency-domain energy-saving state, the spatial domain energy-saving state and the power domain energy-saving state,
   wherein the second time-domain energy-saving state includes at least one of transmitting a common signal at an extended transmission period, transmitting a simplified common signal, and normally transmitting a downlink signal and stopping or reducing receiving an uplink signal.
6. The method according to supplement 5, wherein the simplified common signal includes:
   a synchronization signal block (SSB) excluding a master information block (MIB) or a physical broadcast channel (PBCH), or a discovery reference signal (DRS) including a synchronization reference signal (SS).
7. The method according to supplement 4 or 5, wherein,
   the frequency-domain energy-saving state includes reducing a service bandwidth; and/or,
   the spatial energy-saving state includes at least one of reducing the number of antenna elements or radio frequency transceiving units, reducing the number of transmitted analog beams, reducing the number of transmit antenna ports of a channel state information reference signal and reducing the number of transmission reception points; and/or,
   the power domain energy-saving state includes at least one of reducing transmit power of a downlink reference signal or a common signal and reducing transmit power of a data channel.
8. The method according to any one of supplements 1-3, wherein the indication information includes configuration information of a first timer, the configuration information of the first timer including at least one of the following:
   a running time length of the first timer, a start-up time offset of the first timer, and a start-up period of the first timer,
   wherein the cell is in the second state during running of the first timer.
9. The method according to supplement 8, wherein the configuration information of the first timer is obtained via at least one of the following:
   a time length, a period and an offset in the period during which the cell is in the non-energy-saving state;
   a time length, a period and an offset in the period during which the cell is in the first energy-saving state; and
   a time length, a period and an offset in the period during which the cell is in the second energy-saving state.
10. The method according to supplement 1, wherein the indication information includes configuration information of a second timer, the configuration information of the second timer including a running time length of the second timer, wherein the cell is in the second state during running of the second timer.
11. The method according to supplement 10, wherein a start-up condition of the second timer includes:
   receiving a common signal from the cell; or
   receiving a specific signal of the terminal equipment from the cell.
12. The method according to supplement 1 or 8 or 10, wherein the indication information includes at least one of the following:
   first information for indicating switching of the cell between the first state and the second state; and
   second information for indicating switching of the cell between the non-energy-saving state and at least one of the energy-saving states.
13. The method according to supplement 12, wherein,
   the second information includes information for indicating that the cell is in one of the time-domain energy-saving state, frequency-domain energy-saving state, power domain energy-saving state and spatial energy-saving state or a combination thereof.
14. The method according to supplement 13, wherein,
   the second information is used for switching a configuration parameter of the terminal equipment to a configuration parameter supporting one of the time-domain energy-saving state, frequency-domain energy-saving state, power domain energy-saving state and spatial energy-saving state or a combination thereof
15. The method according to supplement 12, wherein,
   the first information is used for indicating that the cell switches between a BWP supporting the first state and a BWP supporting the second state,
   and the second information is used to indicate that the cell switches between a non-energy-saving BWP and at least one BWP supporting the energy-saving state.
16. The method according to supplement 12, wherein,
   the first information and/or the second information is/are transmitted via a common signal of L1 or L2.
17. The method according to supplement 16, wherein,
   the common signal of L1 includes a PDCCH scrambled by a network energy-saving identifier (NES-RNTI), and the common signal of L2 includes an MAC control element (CE) scheduled by the PDCCH scrambled by the NES-RNTI, wherein the network energy-saving identifier is transmitted to the terminal equipment by system broadcast.
18. The method according to supplement 12, wherein,
   a start-up condition of the second timer includes at least one of the following:
   receiving the first information for indicating that the cell enters the second state; and
   receiving the second information for indicating that the cell enters the non-energy-saving state and/or the second energy-saving state.
19. The method according to supplement 12, wherein,
   a stopping condition of the first timer or the second timer includes at least one of the following:
   receiving the first information indicating that the cell enters the first state; and
   receiving the second information indicating that the cell enters the first energy-saving state.
20. The method according to supplement 8 or 10, wherein,
   the configuration information of the first timer and/or the configuration information of the second timer is/are transmitted via a system broadcast message
21. The method according to supplement 1, wherein,
   the indication information is transmitted at the cell, or the indication information is transmitted at another cell in a network device to which the cell belongs, or the indication information is transmitted at another network device adjacent to the network device to which the cell belongs.
22. The method according to supplement 1, wherein,
   system broadcast, a layer 1 or layer 2 common signal or a paging message are received from the cell in a second period during which the cell is in the second state,
   and system broadcast, a layer 1 or layer 2 common signal or a paging message are not received from the cell in a first period during which the cell is in the first state.
23. The method according to supplement 1, wherein,
   a specific signal of the terminal equipment is received from the cell in the second period during which the cell is in the second state,
   and a specific signal of the terminal equipment is not received from the cell in the first period during which the cell is in the first state.
24. The method according to supplement 23, wherein the specific signal of the terminal equipment includes a PDCCH for scheduling a hybrid automatic repeat request initial transmission data of the terminal equipment.
25. The method according to supplement 24, wherein,
   a *drx-onDurationTimer* timer is started or restarted when the following condition is satisfied and the cell is in the second period: [(SFN × 10) + subframe number] modulo (drx-ShortCycle) = (drx-StartOffset) modulo (drx-ShortCycle); and the *drx-onDurationTimer* timer is stopped at the end of the second period.
26. The method according to supplement 24, wherein,
   a discontinuous reception inactivity timer (*drx-InactivityTimer*) is started or restarted when the PDCCH for scheduling a hybrid automatic repeat request initial transmission data is received and the cell is in the second period,
   and the *drx-InactivityTimer* timer is stopped at the end of the second period.
27. The method according to supplement 24, wherein,
   a random access contention resolution timer (*ra-ContentionResolutionTimer*) is started when the following conditions are satisfied:
   msg3 of random access is transmitted, and the cell is in the second period; and
   the *ra-ContentionResolutionTimer* timer is stopped at the end of the second period.
28. The method according to supplement 24, wherein,
   the specific signal of the terminal equipment further includes a PDCCH for scheduling HARQ retransmission data of the terminal equipment.
29. The method according to supplement 28, wherein,
   a discontinuous downlink retransmission timer (*drx-RetransmissionTimeDL*) is started when the following conditions are satisfied:
   a downlink HARQ round-trip time timer expires, HARQ data are not decoded correctly, and the cell is in the second period; and
   the *drx-HARQ-RTT-TimerDL* timer is stopped at the end of the second period.
30. The method according to supplement 28, wherein,
   a discontinuous reception uplink retransmission timer (*drx-RetransmissionTimeUL*) is started when the following conditions are satisfied:
   an uplink HARQ round-trip time timer expires, and the cell is in the second period; and
   the *drx-RetransmissionTimeUL* timer is stopped at the end of the second period.
31. The method according to supplement 1, wherein,
   a random access response (RAR) is received from the cell in the second period during which the cell is in the second state,
   and a random access response (RAR) is not received from the cell in the first period during which the cell is in the first state.
32. The method according to supplement 31, wherein,
   a random access response reception timer is started when the following conditions are satisfied:
   msg1 or MsgA of random access is transmitted, and the cell is in the second period; and
   the random access response reception timer is stopped at the end of the second period.
33. The method according to supplement 1, wherein,
   in the second period during which the cell is in the second state, CSI-RS measurement, radio resource management (RRM) measurement, radio link monitoring (RLM) or beam failure detection (BFD) are performed;
   and in the first period during which the cell is in the first state, no radio resource management (RRM) measurement, radio link monitoring (RLM) or beam failure detection (BFD) is performed.
34. A terminal equipment, including a memory and a processor, the memory storing a computer program, and the processor being configured to execute the computer program to carry out the information processing method as described in any one of supplements 1-33.

### A network device side

1. An information processing method, applicable to a network device, characterized in that the method includes:
   transmitting indication information for indicating a first state and a second state of a cell related to downlink transmission to a terminal equipment, so that the terminal equipment receives information from the cell according to the indication information,
   wherein the cell is a cell where the terminal equipment is camped or a cell to which the terminal equipment is connected.
2. The method according to supplement 1, wherein,
   downlink signals transmitted when the cell is in the first state are less than downlink signal transmitted when the cell is in the second state.
3. The method according to supplement 1 or 2, wherein,
   the first state includes a first energy-saving state, and the second state includes a non-energy-saving state and/or a second energy-saving state; or,
   the first state includes the first energy-saving state and/or the second energy-saving state, and the second state includes a non-energy-saving state;
   wherein downlink signals transmitted when the cell is in the first energy-saving state are less than downlink signals transmitted when the cell is in the second energy-saving state.
4. The method according to supplement 3, wherein,
   the first energy-saving state includes a first time-domain energy-saving state, or a combination of the first time-domain energy-saving state, a frequency-domain energy-saving state, a spatial domain energy-saving state and a power domain energy-saving state,
   wherein the first time-domain energy-saving state includes at least one of the following: stopping transmitting a common signal and stopping transmitting a common signal and a UE-specific signal.
5. The method according to supplement 3, wherein,
   the second energy-saving state includes at least one of a second time-domain energy-saving state, a frequency-domain energy-saving state, a spatial domain energy-saving state and a power domain energy-saving state or a combination thereof,
   wherein the second time-domain energy-saving state includes at least one of the following: transmitting a common signal at an extended transmission period, transmitting a simplified common signal, and normally transmitting a downlink signal and stopping or reducing receiving an uplink signal.
6. The method according to supplement 5, wherein the simplified common signal includes:
   a synchronization signal block (SSB) excluding a master information block (MIB) or a physical broadcast channel (PBCH), or includes a discovery reference signal (DRS) including a synchronization reference signal (SS).
7. The method according to supplement 4 or 5, wherein,
   the frequency-domain energy-saving state includes reducing a service bandwidth; and/or,
   the spatial domain energy-saving state includes at least one of the following: reducing the number of antenna elements or radio frequency transceiving units (TxRUs); reducing the number of transmitted analog beams; reducing the number of transmit antenna ports of a channel state information reference signal (CSI-RS) (the number of digital beam-forming ports); and reducing the number of transmission reception points; and/or,
   the power domain energy-saving state includes at least one of the following: reducing transmit power of a downlink reference signal or a common signal; and reducing transmit power of a data channel.
8. The method according to any one of supplements 1-3, wherein the indication information includes configuration information of a first timer, the configuration information of the first timer including at least one of the following:
   a running time length of the first timer, a start-up time offset of the first timer, and a start-up period of the first timer;
   wherein during the on-duration of the first timer, the cell is in the second state.
9. The method according to supplement 8, wherein the configuration information of the first timer is represented by at least one of the following:
   a time length, a period and an offset in the period during which the cell is in the non-energy-saving state;
   a time length, a period and an offset in the period during which the cell is in the first energy-saving state; and
   a time length, a period and an offset in the period during which the cell is in the second energy-saving state.
10. The method according to supplement 1, wherein,
   the indication information includes configuration information of a second timer, the configuration information of the second timer including a running time length of the second timer, wherein the cell is in the second state during running of the second timer.
11. The method according to supplement 10, wherein a start-up condition of the second timer includes:
   transmitting a common signal at the cell, or
   transmitting a dedicated signal of the terminal equipment at the cell.
12. The method according to supplement 1 or 8 or 10, wherein the indication information further includes at least one of the following:
   first information for indicating switching of the cell between the first state and the second state; and
   second information for indicating switching of the cell between the non-energy-saving state and at least one of the energy-saving states.
13. The method according to supplement 12, wherein,
   the second information includes information indicating that the cell is in one of the time-domain energy-saving state, the frequency-domain energy-saving state, the power domain energy-saving state and the spatial domain energy-saving state or a combination thereof.
14. The method according to supplement 13, wherein,
   the second information is used to switch configuration parameters of the terminal equipment to configuration parameters supporting one of the time-domain energy-saving state, the frequency-domain energy-saving state, the power domain energy-saving state and the spatial domain energy-saving state or a combination thereof.
15. The method according to supplement 12, wherein,
   the first information is used to indicate that the cell switches between a BWP supporting the first state and a BWP supporting the second state;
   and the second information is used to indicate that the cell switches between a non-energy-saving BWP and at least one BWP supporting the energy-saving state.
16. The method according to supplement 12, wherein,
   the first information and/or the second information is/are transmitted via a common signal of L1 or L2.
17. The method according to supplement 16, wherein,
   the common signal of L1 includes a PDCCH scrambled by a network energy-saving identifier (NES-RNTI), and the common signal of L2 includes an MAC control element (CE) scheduled by the PDCCH scrambled by the NES-RNTI, wherein the NES-RNTI is transmitted to the terminal equipment by system broadcast.
18. The method according to supplement 12, wherein,
   the condition for starting the second timer includes at least one of the following:
   transmitting the first information for indicating that the cell enters the second state; and
   transmitting the second information for indicating that the cell enters the non-energy-saving state and/or the second energy-saving state.
19. The method according to supplement 12, wherein,
   the condition for stopping the first timer or the second timer includes at least one of the following:
   transmitting the first information indicating that the cell enters the first state; and
   transmitting second information indicating that the cell enters the first energy-saving state.
20. The method according to supplement 8 or 10, wherein,
   the configuration information of the first timer and/or the configuration information of the second timer is/are transmitted via a system broadcast message.
21. The method according to supplement 1, wherein,
   the indication information is transmitted at the cell, or, the indication information is transmitted at other cells in a network device to which the cell belongs, or, the indication information is transmitted at other network devices adjacent to the network device to which the cell belongs.
22. The method according to supplement 1, wherein,
   system broadcasts, L1/L2 common signals, or paging messages are transmitted at the cell in the second period during which the cell is in the second state,
   and system broadcasts, L1/L2 common signals, or paging messages are not transmitted at the cell in the first period during which the cell is in the first state.
23. The method according to supplement 1, wherein,
   the dedicated signals of the terminal equipment are transmitted at the cell in the second period during which the cell is in the second state,
   and the dedicated signals of the terminal equipment are not transmitted at the cell in the first period during which the cell is in the first state.
24. The method according to supplement 23, wherein the dedicated signals of the terminal equipment include a PDCCH for scheduling HARQ initial transmission data of the terminal equipment.
25. The method according to supplement 24, wherein,
   the dedicated signals of the terminal equipment further include a PDCCH for scheduling HARQ retransmission data of the terminal equipment.
26. The method according to supplement 1, wherein,
   in the second period during which the cell is in the second state, a random access response (RAR) is transmitted at the cell;
   and in the first period during which the cell is in the first state, no random access response (RAR) is transmitted at the cell.
27. A terminal equipment, including a memory and a processor, the memory storing a computer program, and the processor being configured to execute the computer program to carry out the information processing method as described in any one of supplements 1-26.

### System

1. A communication system, including the above network device and the terminal equipment.

## Claims

1. An information processing apparatus, applicable to a terminal equipment, **characterized in that** the apparatus comprises:
a receiving unit configured to receive indication information for indicating a first state and a second state of a cell related to downlink transmission; and
a processing unit configured to receive information from the cell according to the indication information, the cell being a cell where the terminal equipment is camped or a cell to which the terminal equipment is connected.

2. The apparatus according to claim 1, wherein,
downlink signals transmitted when the cell is in the first state are less than downlink signals transmitted when the cell is in the second state.

3. The apparatus according to claim 1, wherein,
the first state includes a first energy-saving state, and the second state includes a non-energy-saving state and/or a second energy-saving state; or,
the first state includes a first energy-saving state and/or a second energy-saving state, and the second state includes a non-energy-saving state;
wherein downlink signals transmitted when the cell is in the first energy-saving state are less than downlink signals transmitted when the cell is in the second energy-saving state.

4. The apparatus according to claim 3, wherein,
the first energy-saving state includes a first time-domain energy-saving state, or a combination of the first time-domain energy-saving state with at least one of a frequency-domain energy-saving state, a spatial domain energy-saving state and a power domain energy-saving state, wherein the first time-domain energy-saving state includes at least one of stopping transmitting a common signal and stopping transmitting a common signal and a terminal equipment specific signal; and/or
the second energy-saving state includes at least one or a combination of the second time-domain energy-saving state, the frequency-domain energy-saving state, the spatial domain energy-saving state and the power domain energy-saving state, wherein the second time-domain energy-saving state includes at least one of transmitting a common signal at an extended transmission period, transmitting a simplified common signal, and normally transmitting a downlink signal and stopping or reducing receiving an uplink signal.

5. The apparatus according to claim 4, wherein,
the simplified common signal includes a synchronization signal block excluding a master information block or a physical broadcast channel, or a discovery reference signal including a synchronization reference signal; and/or,
the frequency-domain energy-saving state includes reducing a service bandwidth; and/or,
the spatial energy-saving state includes at least one of reducing the number of antenna elements or radio frequency transceiving units, reducing the number of transmitted analog beams, reducing the number of transmit antenna ports of a channel state information reference signal and reducing the number of transmission reception points; and/or,
the power domain energy-saving state includes at least one of reducing transmit power of a downlink reference signal or a common signal and reducing transmit power of a data channel.

6. The apparatus according to claim 1, wherein,
the indication information includes configuration information of a first timer, the configuration information of the first timer including at least one of the following: a running time length of the first timer, a start-up time offset of the first timer, and a start-up period of the first timer, wherein the cell is in the second state during running of the first timer; and/or,
the indication information includes configuration information of a second timer, the configuration information of the second timer including a running time length of the second timer, wherein the cell is in the second state during running of the second timer; and/or,
the indication information includes at least one of first information for indicating switching of the cell between the first state and the second state, and second information for indicating switching of the cell between the non-energy-saving state and at least one of the energy-saving states.

7. The apparatus according to claim 6, wherein the receiving unit obtains the configuration information of the first timer via at least one of the following:
a time length, a period and an offset in the period during which the cell is in the non-energy-saving state;
a time length, a period and an offset in the period during which the cell is in the first energy-saving state; and
a time length, a period and an offset in the period during which the cell is in the second energy-saving state.

8. The apparatus according to claim 6, wherein,
a start-up condition of the second timer includes at least one of the following:
receiving a common signal from the cell;
receiving a specific signal of the terminal equipment from the cell;
receiving first information indicating that the cell enters the second state; and
receiving second information indicating that the cell enters the non-energy-saving state and/or the second energy-saving state;
and/or,
a stopping condition of the first timer or the second timer includes at least one of the following:
receiving first information indicating that the cell enters the first state; and
receiving second information indicating that the cell enters the first energy-saving state.

9. The apparatus according to claim 6, wherein,
the second information includes information for indicating that the cell is in one of the time-domain energy-saving state, frequency-domain energy-saving state, power domain energy-saving state and spatial energy-saving state or a combination thereof, and/or includes a configuration parameter for switching a configuration parameter of the terminal equipment to supporting one of the time-domain energy-saving state, frequency-domain energy-saving state, power domain energy-saving state and spatial energy-saving state or a combination thereof, and/or includes information for indicating that the cell switches between a non-energy-saving bandwidth part and at least one bandwidth part supporting the energy-saving state; and/or,
the first information includes information for indicating that the cell switches between a bandwidth part supporting the first state and a bandwidth part supporting the second state.

10. The apparatus according to claim 6, wherein,
the configuration information of the first timer and/or the configuration information of the second timer is/are transmitted via a system broadcast message; and/or,
the first information and/or the second information is/are transmitted via a common signal of layer 1 or layer 2.

11. The apparatus according to claim 10, wherein,
the common signal of layer 1 includes a physical downlink control channel scrambled by a network energy-saving identifier, and the common signal of layer 2 includes a media access layer control unit scheduled by a physical downlink control channel scrambled by the network energy-saving identifier, wherein the network energy-saving identifier is transmitted to the terminal equipment by system broadcast.

12. The apparatus according to claim 1, wherein,
the indication information is transmitted at the cell, or the indication information is transmitted at another cell in a network device to which the cell belongs, or the indication information is transmitted at another network device adjacent to the network device to which the cell belongs.

13. The apparatus according to claim 1, wherein,
the processing unit receives system broadcast, a layer 1 or layer 2 common signal or a paging message from the cell in a second period during which the cell is in the second state, and the processing unit does not receive system broadcast, a layer 1 or layer 2 common signal or a paging message from the cell in a first period during which the cell is in the first state; and/or
the processing unit receives a specific signal of the terminal equipment from the cell in the second period during which the cell is in the second state, and the processing unit does not receive a specific signal of the terminal equipment from the cell in the first period during which the cell is in the first state; and/or
the processing unit receives a random access response from the cell in the second period during which the cell is in the second state, and the processing unit does not receive a random access response from the cell in the first period during which the cell is in the first state; and/or
the processing unit performs channel state information reference signal measurement, radio resource management measurement, radio link monitoring or beam failure detection in the second period during which the cell is in the second state, and the processing unit does not perform channel state information reference signal measurement, radio resource management measurement, radio link monitoring or beam failure detection in the first period during which the cell is in the first state.

14. The apparatus according to claim 13, wherein the specific signal of the terminal equipment includes a physical downlink control channel for scheduling hybrid automatic repeat request initial transmission data of the terminal equipment.

15. The apparatus according to claim 14, wherein,
the processing unit starts or restarts a discontinuous reception start-up time timer when the following condition is satisfied and the cell is in the second period:
[(SFN × 10) + subframe number] modulo (*drx-ShortCycle*) = (*drx-StartOffset*) modulo (*drx-ShortCycle*); where, *SFN* is a system frame number, *subframe number* is a subframe number, *drx-ShortCycle* is a period of discontinuous reception, and *drx-StartOffset* is a time offset of the discontinuous reception within the period;
the processing unit stops the discontinuous reception start-up time timer at the end of the second period;
and/or
the processing unit starts or restarts a discontinuous reception inactivity timer in receiving the physical downlink control channel for scheduling hybrid automatic repeat request initial transmission data and the cell is in the second period, and the processing unit stops the discontinuous reception inactivity timer at the end of the second period;
and/or
the processing unit starts a random access contention resolution timer when the following conditions are satisfied: msg3 of random access is transmitted, and the cell is in the second period; and the processing unit stops the random access contention resolution timer at the end of the second period.

16. The apparatus according to claim 14, wherein,
the specific signal of the terminal equipment further includes a physical downlink control channel for scheduling hybrid automatic repeat request retransmission data of the terminal equipment.

17. The apparatus according to claim 16, wherein,
the processing unit starts a discontinuous downlink retransmission timer when the following conditions are satisfied: a downlink hybrid automatic repeat request round-trip time timer expires, hybrid automatic repeat request data are not decoded correctly, and the cell is in the second period; and the processing unit stops the downlink hybrid automatic repeat request round-trip time timer at the end of the second period;
and/or
the processing unit starts a discontinuous reception uplink retransmission timer when the following conditions are satisfied: an uplink hybrid automatic repeat request round-trip time timer expires, and the cell is in the second period; and the processing unit stops the discontinuous reception uplink retransmission timer at the end of the second period.

18. The apparatus according to claim 13, wherein,
the processing unit starts a random access response reception timer when the following conditions are satisfied: msg1 or MsgA of random access is transmitted, and the cell is in the second period;
and the processing unit stops the random access response reception timer at the end of the second period.

19. An information processing method, applicable to a terminal equipment, the method comprising:
receiving indication information for indicating a first state and a second state of a cell related to downlink transmission; and
receiving information from the cell according to the indication information, the cell being a cell where the terminal equipment is camped or a cell to which the terminal equipment is connected.

20. An information processing apparatus, applicable to a network device, **characterized in that** the apparatus comprises:
a transmitting unit configured to transmit indication information for indicating a first state and a second state of a cell related to downlink transmission to a terminal equipment, so that the terminal equipment receives information from the cell according to the indication information, the cell being a cell where the terminal equipment is camped or a cell to which the terminal equipment is connected.
